# FASCICULE DE BREVET EUROPEEN

(11) **EP 1 008 093 B1**
(45) Date de publication et mention de la délivrance du brevet: **13.11.2002**
(21) Numéro de dépôt: 97951335.5
(22) Date de dépôt: 15.12.1997
(51) Int. Cl.: G06K 7/10, G06K 7/08

(54) **PROCEDE ET DISPOSITIF D'IDENTIFICATION A DISTANCE**
VERFAHREN UND VORRICHTUNG ZUR IDENTIFIZIERUNG AUF ABSTAND
METHOD AND DEVICE FOR REMOTE IDENTIFICATION

(30) Priorité: 16.12.1996 FR 9615434
(43) Date de publication de la demande: 14.06.2000
(73) Titulaire: COMMISSARIAT A L'ENERGIE ATOMIQUE, 75015 Paris (FR)
(72) Inventeur: CROCHON, Elisabeth, F-38320 Poisat (FR); VACHERAND, François, F-38800 Le Pont-de-Claix (FR)
(74) Mandataire: Ilgart, Jean-Christophe
(86) Numéro de dépôt international: FR9702299
(87) Numéro de publication internationale: WO98027508

(56) Documents cités:
- EP-A- 0 494 114
- WO-A-93/23767
- WO-A-94/27253
- US-A- 5 266 925

## Description

L'invention se réfère à un procédé d'identification à distance d'objets appelés étiquettes, normalement mobiles, par un appareil interrogateur dans le champ d'interrogation duquel ils peuvent entrer avant d'en sortir de façon aléatoire. Elle concerne aussi une installation correspondante.

De tels procédés peuvent s'appliquer par exemple au contrôle d'accès de personnel, à l'identification de bagages ou d'objets sur un tapis roulant, ou de produits ou d'outils sur une chaîne de production ; d'autres applications courantes concernent le paiement des marchandises à la sortie d'un supermarché ou le péage sur autoroute, en débitant automatiquement un compte. Un exemple antérieur est décrit dans le brevet WO-A-92-22040 de la même demanderesse et montre comment les étiquettes présentes dans le champ d'interrogation étaient amenées par l'interrogateur à fournir successivement leurs codes, ce qui permettait de les identifier. Les étiquettes répondaient ainsi à un signal de commande de l'interrogateur, et quand une étiquette détectait que le code en cours d'identification était différent du sien, elle s'inhibait momentanément, et le cycle d'identification continuait avec les autres étiquettes jusqu'à ce qu'il ne reste plus qu'une étiquette non inhibée correspondant à l'étiquette identifiée. L'inhibition des étiquettes signifie en effet qu'elles n'émettent plus de signal et deviennent donc muettes. En fin de cycle d'identification, sur une seule commande de l'interrogateur, l'étiquette identifiée s'inhibait définitivement et les autres étiquettes levaient leur inhibition momentanée. La procédure d'identification était réinitialisée pour identifier ainsi une autre étiquette. Ces opérations étaient répétées autant de fois que nécessaire pour identifier toutes les étiquettes séparément.

Ce procédé était sujet à certains manques dont le plus important est peut-être qu'il était purement passif, c'est-à-dire qu'il ne faisait que constater la présence des étiquettes dans le champ d'interrogation, en ne permettant que d'enregistrer cette présence ou de la signaler à un autre système ou un opérateur. Il était de plus assez lent : en particulier, un cycle d'interrogation à vide était toujours pratiqué après que toutes les étiquettes avaient été identifiées afin de s'assurer qu'il n'en existait plus. A cause de cette lenteur, l'utilisation de ce procédé dans un environnement dynamique présente le risque de ne pas identifier des étiquettes passant trop rapidement dans le champ d'interrogation.

En prenant en considération ces circonstances, un objet essentiel de l'invention est donc de permettre l'application d'un procédé d'identification du genre du brevet antérieur à des situations plus nombreuses, dans lesquelles les étiquettes peuvent être mobiles, et où l'interrogateur procède à des traitements spécifiques sur l'étiquette : lecture du contenu de l'étiquette distincte du code et/ou écriture d'informations. Il sera ainsi possible de remettre à jour les conditions d'accès des porteurs des étiquettes, de vérifier le bon acheminement de bagages ou d'inscrire un horaire de passage sur une étiquette comprenant un fichier historique. Un autre objet de l'invention est d'accélérer le processus de l'identification pour le rendre plus efficace et réduire le risque d'un défaut de contrôle sur une étiquette passant trop vite.

L'invention consiste en un procédé d'identification à distance d'étiquettes munies d'un code distinctif et situées dans un champ d'un appareil interrogateur, par émission et réception de signaux entre l'interrogateur et les étiquettes, les étiquettes pouvant être inhibées, le procédé comprenant les étapes suivantes :
- une étape d'identification préalable adaptée à un contexte à une seule étiquette, permettant l'identification rapide, en lisant son code, d'une seule étiquette sur un seul signal de l'interrogateur quand ladite étiquette est seule dans le champ de l'appareil interrogateur ;
- si l'appareil interrogateur constate que plusieurs des étiquettes sont présentes à la fois dans le champ, des étapes d'identification desdites étiquettes en lisant successivement le code de chacun desdites étiquettes tout en inhibent temporairement les autres étiquettes qui ne sont pas encore identifiées ;
- une étape de passage d'information entre l'appareil interrogateur et toute étiquette venant d'être identifiée ;
- puis une étape d'inhibition définitive de ladite étiquette venant d'être identifiée.

L'étape d'identification préalable est particulièrement adaptée à un contexte mono-étiquette, contexte fréquent dans le type d'application visée. On peut alors se passer d'une interrogation fragment après fragment. Un autre perfectionnement consiste à optimiser la procédure d'identification fragment après fragment du brevet antérieur. A chaque étape d'identification, l'émission de la séquence de fragments se fera soit du fragment le moins significatif vers le fragment le plus significatif, soit inversement.

L'invention consiste aussi en un système d'identification comprenant des étiquettes et un appareil interrogateur, l'appareil interrogateur et chacune des étiquettes comprenant des émetteurs-récepteurs de signaux, des convertisseurs des signaux en informations logiques et vice-versa, et des moyens logiques de traitement des informations, les étiquettes comprenant chacune un code distinctif et une mémoire, et l'appareil interrogateur comprenant un catalogue de signaux, caractérisé en ce que le catalogue de signaux comprend un signal de commande d'émission des codes des étiquettes par fragments dans un sens de lecture, un signal préalable de commande d'émission de tout leur code par certaines au moins des étiquettes, un signal d'initialisation d'un passage d'information entre l'appareil interrogateur et une étiquette venant d'être identifiée, et un signal d'inhibition définitive de l'étiquette venant d'être identifiée.

Avantageusement, le fragment correspond à un élément binaire ou bit.

L'art antérieur proche comprend le document WO 94/27253 A, qui décrit un procédé de réception de messages émis de façon aléatoire par plusieurs émetteurs vers un récepteur unique, où le récepteur forme une file d'attente des messages pour les recevoir successivement en inhibant temporairement les émetteurs ; et le document WO 93/23767 A, qui décrit un procédé d'identification simultanée d'étiquettes en lisant leurs codes par fragments et en inhibant définitivement les étiquettes identifiées.

L'invention va maintenant être décrite plus en détail à l'aide des figures suivantes :
- la figure 1 représente un schéma de l'invention représentant une situation pratique ;
- la figure 2 représente côte à côte les principaux éléments de l'appareil interrogateur et d'une étiquette ;
- et les figures 3 et 4 représentent les diagrammes de fonctionnement de l'appareil interrogateur et des étiquettes.

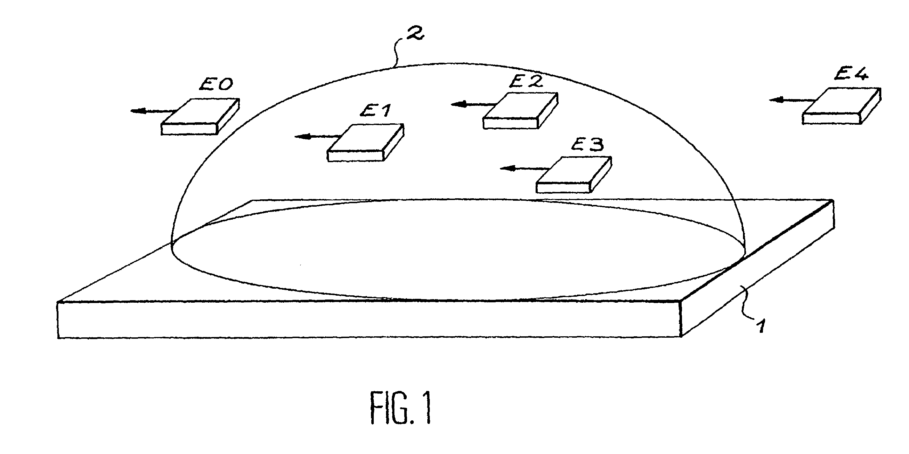

La figure 1 représente donc un interrogateur 1 apte à communiquer avec des étiquettes dans l'étendue d'un champ d'identification 2 dont les limites sont définies entre autres par la puissance des éléments émetteurs et la sensibilité des récepteurs de l'interrogateur 1. Des étiquettes E passent en flux aléatoire, continu ou non, devant l'interrogateur 1 et traversent le champ d'identification 2 ; ici, on en a figuré cinq, référencées de E0 à E4, dont la première E0 est déjà sortie du champ d'identification 2, les trois suivantes E1 à E3 s'y trouvent et la dernière E4 a y entrer. Les étiquettes E sont fixées à des objets ou des personnes non représentés selon l'application envisagée, et l'interrogateur 1, symbolisé ici par une plaque, peut prendre une forme différente : il peut s'agir d'un portique délimitant une ouverture sous laquelle les porteurs des étiquettes E sont obligés de passer.

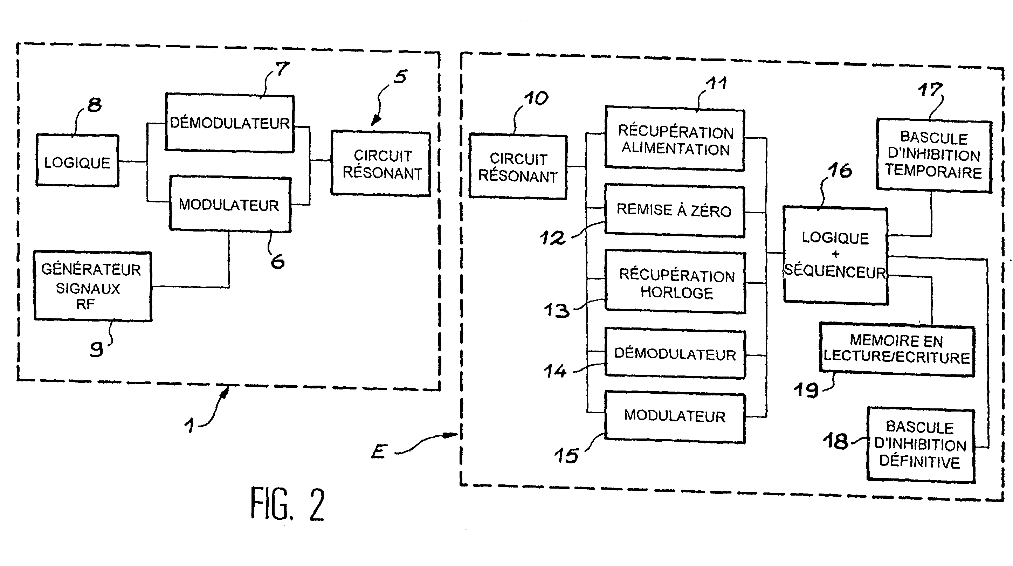

On passe maintenant au commentaire de la figure 2. L'interrogateur comprend : un circuit résonant 5 émetteur-récepteur, comprenant en particulier une antenne et constituant le circuit primaire d'un couplage inductif entre l'interrogateur 1 et les étiquettes E ; un modulateur 6 et un démodulateur 7 pour convertir un motif de signal en un signal modulé émis par le circuit résonant 5, et vice-versa ; des moyens logiques 8 permettant de commander les étapes de la transaction d'identification entre l'interrogateur 1 et les étiquettes E, de produire des signaux binaires qu'ils convertissent ensuite en motifs de signaux fournis au modulateur 6, et enfin de recueillir les signaux qu'ils reçoivent du démodulateur 7 et qui proviennent de l'étiquette E pour les convertir en informations binaires ; enfin, il existe un module générateur de signaux de radiofréquence 9 relié au modulateur 6 qui commande le fonctionnement des étiquettes E.

Celles-ci comprennent elles aussi un circuit résonant 10, comportant une antenne formant le circuit secondaire du couplage inductif entre l'interrogateur et l'étiquette et qui est couplé à un module de récupération d'alimentation 11 chargé de redresser une porteuse émise continuellement par l'interrogateur 1, de la filtrer et de la stabiliser à la tension de fonctionnement nominale de l'électronique de l'étiquette E afin de récupérer l'énergie nécessaire au fonctionnement de l'étiquette ; un module de remise à zéro 12, vérifiant qu'une tension d'alimentation suffisante est appliquée à l'étiquette E pendant un temps suffisamment long, ce qui indique que l'étiquette E a pénétré dans le champ d'interrogation 2 et permet alors au module de remise à zéro 12 d'initialiser les moyens logiques de l'étiquette E pour les mettre en état de remplir leur rôle à la transaction d'échange d'informations avec l'interrogateur 1 ; un module de récupération d'horloge 13 pour cadencer la transaction, et qui parvient à ce résultat en divisant la fréquence de la porteuse ; un démodulateur 14 extrayant du signal reçu par le circuit résonant 10 un signal utilisable par les moyens logiques de l'étiquette ; et un modulateur 15 permettant de transmettre de informations de l'étiquette E vers l'interrogateur 1.

Ces modules 11 à 15 sont également reliés à des moyens logiques 16 responsables de la transaction, de l'interprétation des signaux reçus de l'interrogateur 1, de l'envoi des signaux demandés et du séquencement de la transaction. Les moyens logiques 16 peuvent commander une bascule d'inhibition temporaire 17 (appelée aussi inhibition momentanée) et une bascule d'inhibition définitive 18, et ils communiquent enfin avec une mémoire 19 qui peut être une mémoire EEPROM (mémoire morte programmable et effaçable électroniquement en lecture et éventuellement en écriture).

Ces moyens logiques 16 et la logique 8 permettent également la gestion de la temporisation nécessaire aux échanges entre l'interrogateur et les étiquettes. Cette temporisation est réalisée par exemple grâce à des compteurs associés à des horloges.

Les informations échangées correspondent à des signaux binaires. Dans tous les cas, les étiquettes E sont amenées à donner leurs codes, et, selon ce qui leur est demandé, d'un seul coup ou bit par bit. Selon un premier exemple de réalisation mettant en oeuvre un codage de type Huffman, l'interrogateur 1 émet six signaux, dont quatre de trois bits de données et deux de deux bits de données, qui sont indiqués sur le tableau I.

**TABLEAU I**

| Signaux | Signification |
|---|---|
| 111 | Début d'interrogation |
| 110 | Début de séquence d'identification en commençant par le bit le plus significatif |
| 100 | Début de séquence d'identification en commençant par le bit le moins significatif |
| 101 | Confirmation du code de l'étiquette identifiée |
| 00 | Lecture du bit suivant, aucune étiquette n'ayant son bit précédent à 1 |
| 01 | Lecture du bit suivant, au moins une étiquette ayant son bit précédent à 1 |

Le signal de début d'interrogation fait émettre simultanément tout leur code par toutes les étiquettes E qui n'ont pas été inhibées définitivement. Les deux signaux de début de séquence incitent les étiquettes E qui n'ont pas été inhibées définitivement à donner leur code bit après bit, soit en commençant par le bit le plus significatif (en lisant le code dans le sens naturel) soit en commençant par le bit le moins significatif (en lisant le code de droite à gauche). Le signal de confirmation de code, qui est suivi du code de l'étiquette identifiée, annonce qu'une transaction particulière aura lieu avec cette étiquette ; ce signal de conformation correspond au signal d'initialisation de la transaction. Enfin, les informations de type 0 et 1 indiquent que des bits égaux à un n'ont pas été trouvés, ou au contraire l'ont été, dans les codes des étiquettes en cours de lecture. A la réception de ces informations, les étiquettes dont le bit précédemment lu ne correspond pas à ces dites informations envoyées par l'interrogateur s'inhibent temporairement.

Le procédé d'identification va maintenant être donné au tableau II avec l'exemple de la figure 1, ce qui permettra de l'expliquer clairement ; les étiquettes E1 à E4 ont pour code 00011, 01100, 01010 et 00111 respectivement ; le code de l'étiquette E0, sortie du champ d'interrogation 2 et qui n'y rentrera plus, est inutile à donner. E4 entrera dans le champ de l'interrogateur en cours de séquence d'interrogation.

**TABLEAU II**

| | | |
|---|---|---|
| Action de l'interrogateur 1 | Etat de l'ensemble des étiquettes E | Action des étiquettes E |
| Début de l'interrogation (signal 111) | E1 E2, E3 dans le champ d'interrogation 2 | E1, E2 et E3 renvoient leur code |
| Début de séquence d'identification au bit plus significatif (signal 110) | | Aucune réponse : E1, E2 et E3 ont leur premier bit à 0 |
| Information de type 0 (signal 00) | | E2 et E3 émettent, leur deuxième bit étant à 1 |
| Information de type 1 | | E1 est inhibée temporairement ; E2 émet, son troisième bit étant 1 |
| Information de type 1 | | E3 est inhibée temporairement ; pas d'émission, les étiquettes encore actives (E2) ayant leur quatrième bit à 0 |
| Information de type 0 | | Pas d'émission, les étiquettes encore actives (E2) ayant leur cinquième bit à 0 |
| Confirmation du code 01100 (signal 10101100) | | L'étiquette E2 reconnaît son code |
| Echange d'informations avec l'étiquette E2 | | |
| Début de l'interrogation | E2 devient inactive et E1 et E3 redeviennent actives | E2 est inhibée définitivement, E1 et E3 envoient leur code |
| Début de séquence d'identification au bit le moins significatif (signal 100) | | E1 émet, son cinquième bit étant égal à 1 |
| Information de type 1 | | E3 est inhibée temporairement, E1 émet |
| Information de type 1 | | Aucune émission |
| Information de type 0 | | Aucune émission |
| Information de type 0 | E4 entre dans le champ d'interrogation | Aucune émission |
| Confirmation du code 00011 | | L'étiquette E1 identifie son code |
| Echange d'informations avec l'étiquette E1 | | |
| Début de l'interrogation | E1 devient inactive, E3 redevient active, E4 devient active | E1 est inhibée définitivement; E3 et E4 envoient leur code |
| Début de séquence d'identification au bit le plus significatif | | Aucune réponse |
| Information de type 0 | | E3 émet |
| Information de type 1 | E1 sort du champ d'interrogation 2 | E4 est inhibée temporairement ; pas d'émission |
| Information de type 0 | | E3 émet |
| Information de type 1 | | Pas d'émission |
| Confirmation du code 01010 | | E3 identifie son code |
| Echange d'informations avec l'étiquette E3 | | |
| Début de l'interrogation | E3 devient inactive, E4 redevient active | E3 est inhibée définitivement ; E4 envoie son code |
| Confirmation du code 00111 | | E4 identifie son code |
| Echange d'informations avec l'étiquette E4 | | |
| Début de l'interrogation | E4 devient inactive | E4 est inhibée définitivement |

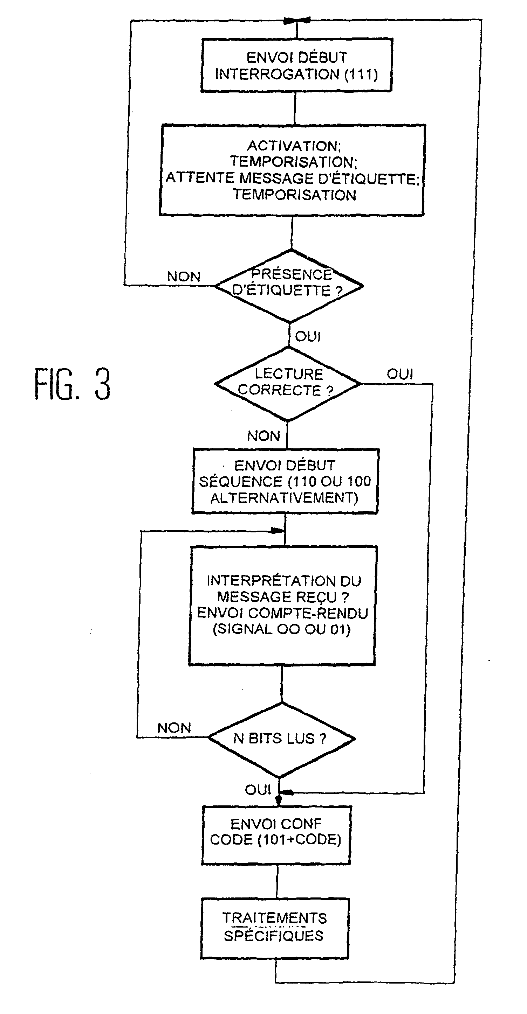

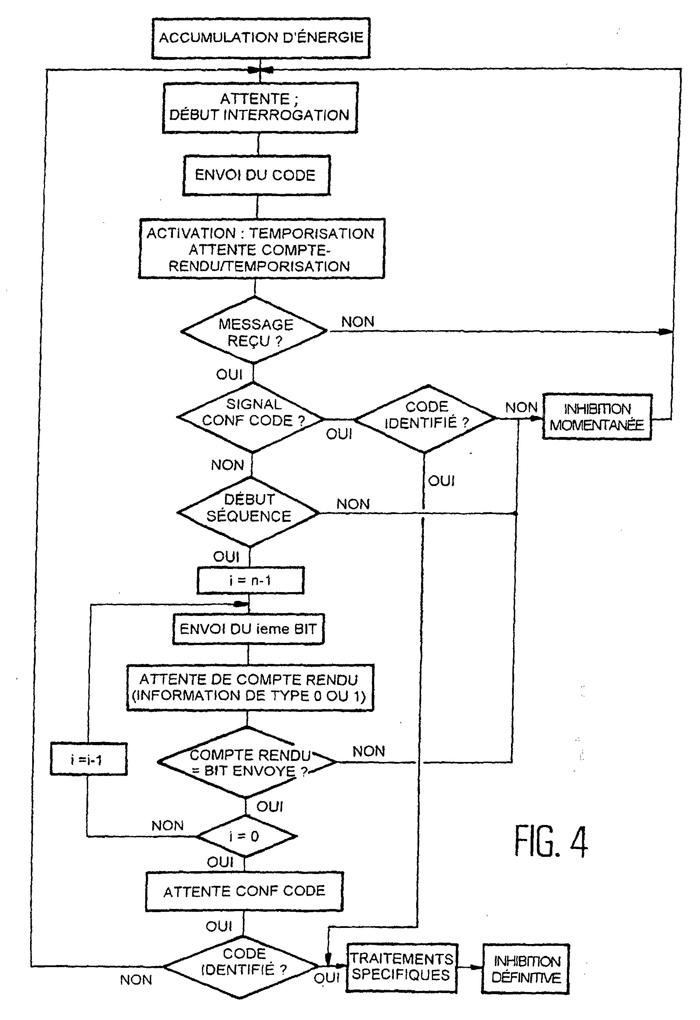

Une présentation plus claire et plus générale du procédé est donnée par les organigrammes des figures 3 et 4 respectivement côté interrogateur et côté étiquette.

Chaque cycle d'identification commence par un signal de début d'interrogation, dans lequel les étiquettes non inhibées envoient d'un coup tout leur code d'identification. Cette étape permet de reconnaître si un signal unique est envoyé, ou si au contraire il y a une superposition de signaux. Dans le premier cas, qui correspond à celui d'une seule étiquette E encore à identifier dans le champ d'interrogation 2, l'identification est immédiate et il est possible de commencer le passage d'informations entre cette étiquette et l'interrogateur 1 sans autre formalité ; dans le cas contraire, on se livre à une identification successive des étiquettes E selon un procédé qui ressemble à celui du brevet antérieur de la demanderesse. Ce procédé implique une lecture bit par bit des codes et comprend des émissions de signaux de type 0 ou 1 selon que les bits précédemment lus des étiquettes en cours d'identification étaient tous égaux à 0, ou non. Quand un signal de type 1 est émis, les étiquettes dont le bit précédemment lu était égal à 0 sont inhibées temporairement, et l'interrogation se poursuit seulement sur les autres. Un avantage important de l'invention est que le signal de début d'interrogation évite de recourir à la séquence d'identification quand il n'y a qu'une étiquette, et mieux encore quand il n'y en a plus du tout, ce qui était indispensable dans le procédé antérieur pour s'assurer que toutes les étiquettes avaient bien été lues.

L'alternance des signaux de début de séquence pour commander des lectures de codes dans les deux sens a pour effet de ne pas favoriser l'identification systématique des étiquettes E dont le code est élevé, ce qui peut laisser aux autres le temps de sortir du champ d'interrogation 2 sans avoir été identifiées. L'étiquette E1 dont le code commence par trois zéros serait ainsi longue à être identifiée si on commençait toujours par la lecture des bits les plus significatifs, car elle serait lue après les étiquettes E2, E3 et même E4, et pourrait donc sortir inaperçue du champ d'interrogation 2. Quand toutes les étiquettes E ont été identifiées et inhibées définitivement, le signal de début d'interrogation ne suscite pas de réponse et l'interrogateur 1 respecte une pause avant de l'émettre de nouveau dans l'attente d'une nouvelle étiquette E qui entrerait dans le champ d'interrogation 2.

## Revendications

1. Procédé d'identification à distance d'étiquettes (E) munies d'un code distinctif et situées dans un champ (2) d'un appareil interrogateur (1), par émission et réception de signaux entre l'interrogateur et les étiquettes, les étiquettes pouvant être inhibées, le procédé comprenant les étapes suivantes :
- une étape d'identification préalable adaptée à un contexte à une seule étiquette, permettant l'identification rapide, en lisant son code, d'une seule étiquette sur un seul signal de l'interrogateur quand ladite étiquette est seule dans le champ (2) de l'appareil interrogateur (1) ;
- si l'appareil interrogateur (1) constate que plusieurs des étiquettes sont présentes à la fois dans le champ (2), des étapes d'identification desdites étiquettes en lisant successivement le code de chacun desdites étiquettes tout en inhibant temporairement les autres étiquettes qui ne sont pas encore identifiées ;
- une étape de passage d'information entre l'appareil interrogateur et toute étiquette venant d'être identifiée ;
- puis une étape d'inhibition définitive de ladite étiquette venant d'être identifiée.

2. Procédé d'identification à distance selon l'invention 1, **caractérisé en ce qu'**il comprend une étape de confirmation d'identification d'étiquette, comprenant une émission d'un signal contenant, au moins, tout ou partie du code de l'étiquette venant d'être identifiée, et qui précède et conditionne l'étape de passage d'information.

3. Procédé d'identification à distance selon la revendication 1, dans une situation où les étiquettes peuvent entrer dans le champ (2) de l'appareil d'identification (1) et en sortir de façon aléatoire, **caractérisé en ce que** l'étape d'identification desdites étiquettes par lecture successive des codes est entreprise soit dans un sens de lecture du code, soit dans l'autre pour chacune des étiquettes.

4. Système d'identification comprenant des étiquettes et un appareil interrogateur, l'appareil interrogateur (1) et chacune des étiquettes (E) comprenant des émetteurs-récepteurs (5, 10) de signaux, des convertisseurs (6, 7, 14, 15) des signaux en informations logiques et vice-versa, et des moyens logiques (8, 16) de traitement des informations, les étiquettes comprenant chacune un code distinctif et une mémoire, et l'appareil interrogateur comprenant un catalogue de signaux, **caractérisé en ce que** le catalogue de signaux comprend un signal de commande d'émission des codes des étiquettes par fragments dans un sens de lecture, un signal préalable de commande d'émission de tout leur code par certaines au moins des étiquettes, un signal d'initialisation d'un passage d'information entre l'appareil interrogateur et une étiquette venant d'être identifiée, et un signal d'inhibition définitive de l'étiquette venant d'être identifiée.

5. Système d'identification selon la revendication 4, **caractérisé en ce que** le catalogue de signaux comprend un second signal de commande d'émission des codes des étiquettes par fragments, dans un sens de lecture inverse du sens de lecture précédent.

## Patentansprüche

1. Verfahren zur Fern-Identifizierung von Etiketten (E), die mit einem unterschiedlichen Code versehen sind und sich in einem Feld (2) einer Befragungsvorrichtung (1) befinden, durch das Senden und Empfangen von Signalen zwischen der Befragungsvorrichtung und den Etiketten, wobei die Etiketten gehemmt werden können und dieses Verfahren die folgenden Schritte umfasst:
- einen vorhergehenden Identifizierungsschritt, angepasst an einen Kontext bzw. eine Situation mit einem einzigen Etikett, der die schnelle Identifizierung eines einzigen Etiketts durch das Lesen seines Codes in einem einzigen Signal durch die Befragungsvorrichtung ermöglicht, wenn das genannte Etikett sich als einziges in dem Feld (2) der Befragungsvorrichtung (1) befindet;
- Schritte zur Identifizierung der genannten Etiketten, indem die Befragungsvorrichtung (1) nacheinander den Code jedes dieser Etiketts liest und dabei die anderen Etiketten temporär hemmt, die noch nicht identifiziert sind, wenn sie feststellt, dass sich mehrere Etiketten gleichzeitig in dem Feld (2) befinden;
- einen Schritt der Informationsübergabe zwischen der Befragungsvorrichtung und jedem soeben identifizierten Etikett;
- sodann einen Schritt der definitiven Hemmung des genannten, soeben identifizierten Etiketts.

2. Verfahren zur Fem-Identifizierung nach Anspruch 1, **dadurch gekennzeichnet, dass** es einen Schritt zur Bestätigung der Identifizierung des Etiketts enthält, der eine Sendung eines Signals umfasst, das den soeben identifizierten Code ganz oder teilweise enthält und der dem Informationsübergabeschritt vorausgeht und ihn bedingt.

3. Verfahren zur Fem-Identifizierung nach Anspruch 1 in einer Situation, wo die Etiketten in zufälliger Art und Weise in das Feld (2) der Befragungsvorrichtung (1) hineingelangen und es verlassen können, **dadurch gekennzeichnet, dass** der Schritt zur Identifizierung dieser Etiketten für jedes Etikett durch sukzessives Lesen der Codes entweder in der einen oder der anderen Leserichtung des Codes erfolgt.

4. Identifizierungssystem, Etiketten und eine Befragungsvorrichtung umfassend, wobei die Befragungsvorrichtung (1) und jede der Etiketten (E) Sende-Empfangseinrichtungen (5, 10) von Signalen, Umsetzer (6, 7, 14, 15) der Signale in logische Informationen und umgekehrt und logische Einrichtungen (8, 16) zur Verarbeitung der Informationen umfasst, wobei jede der Etiketten einen unterschiedlichen Code und einen Speicher hat und die Befragungsvorrichtung einen Signalkatalog umfasst,
**dadurch gekennzeichnet,**
**dass** der Signalkatalog enthält: ein Steuersignal zum Senden der Etiketten-Codes als Fragmente in einer Leserichtung, ein vorhergehendes Steuersignal zum Senden aller Codes durch wenigstens einige der Etiketten, ein Initialisierungssignal einer Informationsübergabe zwischen der Befragungsvorrichtung und eines soeben identifizierten Etiketts und ein Signal zur definitiven Hemmung des soeben identifizierten Etiketts.

5. System nach Anspruch 4, **dadurch gekennzeichnet, dass** der Signalkatalog ein zweites Steuersignal zum Senden der Etikettencodes als Fragmente in einer zur vorhergehenden Leserichtung umgekehrten Richtung enthält.

## Claims

1. Method for the remote identification of labels (E) provided with a distinctive code and located in a field (2) of an interrogation apparatus, by the transmission and reception of signals between the interrogator and the labels, in which the labels can be inhibited, the method comprising the following steps:
- a prior identification step adapted to a single label context, permitting a rapid identification, by reading the code, of a single label on a single signal of the interrogator when only said label is present in the field of the interrogation apparatus,
- if the interrogation apparatus notes that several labels are present at once in the field (2), identification steps take place with respect to said labels by successively reading the code of each of said labels and whilst temporarily inhibiting the other labels not yet identified,
- an information passage step between the interrogation apparatus and the label which has just been identified,
- then a definitive inhibition step with respect to the label which has just been identified.

2. Method for remote identification according to claim 1, **characterized in that** it comprises a label identification confirmation step consisting of the transmission of a signal, which at least contains all or part of the code of the label which has just been identified and which precedes and conditions the information passage step.

3. Remote identification method according to claim 1, in a situation where the labels can enter the field (2) of the identification apparatus (1) and leave the same in random manner, **characterized in that** the step of identifying said labels by the successive reading of codes is undertaken in one or other code reading direction for each of the labels.

4. Identification system comprising labels and an interrogation apparatus (1), each of the labels (E) comprising signal transmitters-receivers (5, 10), converters (6, 7, 14, 15) converting signals into logic informations and vice versa, and logic information processing means, each of the labels having a distinctive code and a memory and the interrogation apparatus comprising a catalogue of signals, **characterized in that** the catalogue of signals comprises a signal for the control of transmission of the codes of the labels in fragments in one reading direction, a prior transmission control signal of the entire code thereof by at least some of the labels, a signal for initializing a passage of information between the interrogation apparatus and a label which has just been identified, and a signal for definitively inhibiting the label which has just been identified.

5. Identification system according to claim 4, **characterized in that** the catalogue of signals comprises a second signal for controlling the transmission of the codes of the labels in fragment form, in a reading direction opposite to that of the preceding reading direction.
